(19) Europäisches Patentamt

European Patent Office

Office européen des brevets

(11) Veröffentlichungsnummer: **0 252 271**
**A2**

(12) **EUROPÄISCHE PATENTANMELDUNG**

(21) Anmeldenummer: **87107725.1**

(22) Anmeldetag: **27.05.87**

(51) Int. Cl.⁴: **H04B 1/08**

(30) Priorität: **11.07.86 DE 3623337**

(43) Veröffentlichungstag der Anmeldung:
**13.01.88 Patentblatt 88/02**

(84) Benannte Vertragsstaaten:
**AT CH DE FR IT LI**

(71) Anmelder: **GRUNDIG E.M.V.**
**Elektro-Mechanische Versuchsanstalt Max**
**Grundig holländ. Stiftung & Co. KG.**
**Kurgartenstrasse 37**
**D-8510 Fürth(DE)**

(72) Erfinder: **Nohse, Dieter C/O Grundig E. M. V.**
**Max Grundig holländ. Stiftung & Co KG**
**Kurgartenstrasse 37 D-8510 Fürth/Bay(DE)**

(54) **Portables Rundfunkgerät.**

(57) Bei einem portablen Runkfunkgerät mit einer von einem Mikrocomputer gesteuerten Sichtanzeige für einstellbare und/oder abrufbare Daten, ist als Zusatzgerät ein Geiger-Müller-Zählrohr zur Messung radioaktiver Strahlung vorgesehen. Die Auswertung und Anzeige der gemessenen Strahlung erfolgt über den im Rundfunkgerät vorhandenen Mikrocomputer und die gleichfalls vorhandene Sichtanzeige.

EP 0 252 271 A2

## PORTABLES RUNDFUNKGERÄT

Die Erfindung betrifft ein portables Rundfunkgerät der im Oberbegriff des Anspruches 1 angegebenen Art.

Rundfunkgeräte mit einer von einem Mikrocomputer gesteuerten Sichtanzeige für einstellbare und/oder abrufbare Daten sind bekannt. Derartig ausgestattete Rundfunkempfänger bieten zwar den Vorteil eines sehr hohen Bedienungskomforts. Was jedoch die eigentliche Empfangsleistung des Gerätes anbelangt, so ergeben sich hieraus nur unwesentliche Verbesserungen gegenüber herkömmlichen Empfangsgeräten. Der erhebliche technische und kostenmäßige Aufwand für den Bedienungskomfort erscheint somit insbesondere für ein portables Rundfunkgerät nur bedingt gerechtfertigt.

Der Erfindung liegt die Aufgabe zugrunde, ein portables Rundfunkgerät der im Oberbegriff des Anspruches 1 angegebenen Art so auszugestalten oder zu ergänzen, daß die vor allem durch den Mikrocomputer und die vom ihm gesteuerte Sichtanzeige gegebene Leistungsfähigkeit des Gerätes auch ausgeschöpft ist und der damit verbundene technische Aufwand in einem besseren Verhältnis zum technischen Aufwand der eigentlichen Empfangsteile steht.

Diese Aufgabe wird gemäß der Erfindung durch die im kennzeichnenden Teil des Anspruches 1 angegebenen Merkmale gelöst. Vorteilhafte Weiterbildungen der Erfindung sind in den Unteransprüchen gekennzeichnet.

Das portable Rundfunkgerät gemäß der Erfindung ist in vorteilhafter Weise mit einem Geiger-Müller-Zählrohr zur Messung radioaktiver Strahlung kombiniert. Auswertung und Anzeige der zu messenden Strahlung gestaltet sich hierbei besonders vorteilhaft, da dies über den im Rundfunkgerät bereits vorhandenen Mikrocomputer sowie die gleichfalls vorhandene Sichtanzeige erfolgt.

Der Betreiber eines derartigen Gerätes ist somit in der Lage, z. B. sofort nach Kenntnisnahme eines atomaren Unfalls über den Runkfunk, selbst die für ihn ausschlaggebende örtliche radioaktive Strahlenbelastung zu ermitteln.

Bei der Ausgestaltung eines derartigen Kombinationsgerätes ist es denkbar, das Geiger-Müller-Zählrohr direkt in den Runkfunkempfänger zu integrieren, oder aber über eine externe Buchse an das Empfangsgerät anzuschließen.

Eine besonders vorteilhafte Ausgestaltung des portablen Runkfunkempfängers gemäß der Erfindung besteht darin, daß mittels einer Wähleinheit sowohl die Aktivität als auch die Ionendosis bzw. -

dosisleistung der gemessenen Strahlung in den geläufigen Einheiten Becquerel, Rem oder Sievert abrufbar sind. Hierbei führt der Mikrocomputer die entsprechenden Umrechnungen aus.

### Ansprüche

1. Portables Rundfunkgerät mit einer von einem Mikrocomputer gesteuerten Sichtanzeige für einstellbare und /oder abrufbare Daten, **dadurch gekennzeichnet,** daß als Zusatzgerät ein Geiger-Müller-Zählrohr zur Messung radioaktiver Strahlung vorgesehen ist, und daß die Auswertung und Anzeige der gemessenen Strahlung über den im Rundfunkgerät vorhandenen Mikrocomputer und die gleichfalls vorhandene Sichtanzeige erfolgt.

2. Portables Rundfunkgerät nach Anspruch 1, **dadurch gekennzeichnet,** daß das Geiger-Müller-Zählrohr über eine externe Buchse an das Rundfunkgerät angeschlossen ist.

3. Portables Rundfunkgerät nach Anspruch 1 oder 2, **dadurch gekennzeichnet,** daß mittels einer Wähleinheit die Aktivität und die Ionendosis bzw. - dosisleistung der gemessenen Strahlung in den geläufigen Einheiten Becquerel, Rem oder Sievert über die Sichtanzeige abrufbar sind, wobei der Mikrocomputer die entsprechenden Umrechnungen ausführt.